# EUROPÄISCHE PATENTSCHRIFT

(11) **EP 1 630 470 B1**
(45) Veröffentlichungstag und Bekanntmachung des Hinweises auf die Patenterteilung: **28.11.2012**
(21) Anmeldenummer: 05107600.8
(22) Anmeldetag: 18.08.2005
(51) Int. Cl.: F16T 1/00

(54) **Kondensatableiter**
Steam trap
Purgeur de condensats

(30) Priorität: 21.08.2004 DE 202004013111 U
(43) Veröffentlichungstag der Anmeldung: 01.03.2006
(73) Patentinhaber: ARI-ARMATUREN ALBERT RICHTER GmbH & Co.KG., 33758 Schloss Holte-Stukenbrock (DE)
(72) Erfinder: Fuchs, Michael, 33602, Vlotho (DE)
(74) Vertreter: Dantz, Jan Henning

(56) Entgegenhaltungen:
- DE-A1- 4 304 532
- FR-A- 2 219 713
- US-A- 4 261 382
- US-B1- 6 279 593

## Beschreibung

Die vorliegende Erfindung betrifft einen Kondensatableiter mit einem Kondensatsammelraum und mit einer Kontroll- und Auswerteinrichtung zur Funktionskontrolle.

Kondensatableiter der vorerwähnten Art sind an sich bekannt (siehe z.B. US 6 279 593 B1 und US 4 261 382) und werden in dampfführenden Systemen wie Rohrsystemen, Behältern oder dergleichen eingesetzt, um sich bildendes Kondensat in derartigen Systemen sammeln und aus dem System abführen zu können.

Dabei sind die Kondensatableiter so konstruiert, dass ab einem definierten Abscheidegrad des Kondensatsammelraumes eine automatische Entleerung eingeleitet wird.

Es ist wichtig, dass die Funktion derartiger Kondensatableiter ständig kontrolliert wird, da nicht abgeführtes Kondensat in Dampf-Systemen zu großen Schäden führen kann.

Die Kontroll- und Auswerteinrichtung eines Kondensatableiters hat praktisch die Funktion, ständig zu überwachen, ob im Kondensatsammelraum auch tatsächlich Kondensat vorhanden ist, und dieses auch abgeleitet wird.

Zu diesem Zweck hat man bislang Sensoren verwendet, die als Messbasis die elektrische Leitfähigkeit des Kondensates nutzen.

Nachteilig hierbei ist, dass sich die elektrische Leitfähigkeit des Kondensates aus unterschiedlichen Gründen verändern kann und ein derartiges Kontrollsystem somit keine eindeutige Aussage über das Vorhandensein von Kondensat im Kondensatsammelraum liefern kann.

Der vorliegenden Erfindung liegt die Aufgabe zugrunde, einen Kondensatableiter der gattungsgemäßen Art zu schaffen, der extrem zuverlässig das Vorhandensein von Kondensat im Kondensatsammelraum registrieren kann.

Diese Aufgabe wird erfindungsgemäß dadurch gelöst, dass die Kontroll- und Auswerteinrichtung mit einem in den Kondensatsammelraum hineinragenden Sensor mit einem ersten und einem zweiten Temperaturfühler ausgestattet ist, wobei der erste Temperaturfühler zur Erfassung der Ist-Temperatur im Kondensatsammelraum vorgesehen und dem zweiten Temperaturfühler ein Heizaggregat zugeordnet ist, mittels dessen im Messbereich des zweiten Temperaturfühlers eine Temperatur einstellbar ist, welche um einen vorbestimmten Betrag höher ist als die Temperatur des gesammelten Kondensates, wobei die ermittelte Temperaturdifferenz in der Auswerteinrichtung als Differenzsignal erfasst und mit einem Temperaturdifferenz-Sollwertbereich verglichen und ausgewertet wird.

Insoweit liegt der vorliegenden Erfindung ganz allgemein der Gedanke zugrunde, zur Bestimmung oder Ermittlung des Vorhandenseins von Kondensat im Kondensatsammelraum die Wärmeleitfähigkeit des Kondensates zu nutzen. Dabei kann davon ausgegangen werden, dass das Kondensat bei im übrigen störungsfreien Betrieb eine Temperatur von über 100° Celsius aufweist. Diese Temperatur wird vom ersten Temperaturfühler gemessen. Im Umgebungsbereich des zweiten Temperaeingetaucht ist, wird durch das Heizaggregat ein Temperaturniveau erzeugt, welches höher ist als das Temperaturniveau des Kondensates selbst. Da durch das Kondensat eine Abkühlung im Messbereich des zweiten Temperaturfühlers erfolgt, stellt sich lediglich eine geringe Temperaturdifferenz zwischen den beiden Messfühlern ein. Diese vergleichsweise geringe Temperaturdifferenz ist als Temperaturdifferenz-Sollwertbereich der Auswerteinrichtung eingegeben. Da die ermittelte Temperaturdifferenz bei Vorhandensein von Kondensat mit dem vorgegeben Temperaturdifferenz-Sollwertbereich innerhalb bestimmter Toleranzgrenzen übereinstimmt, kann über die Auswerteinrichtung ein störungsfreier Betrieb angezeigt werden.

Befindet sich hingegen im Kondensatsammelraum im Falle einer Betriebsstörung kein Kondensat, sondern Dampf, so kann der zweite Messfühler mit seinem Heizaggregat aufgrund der gegenüber einem Kondensat niedrigerem Wärmeleitfähigkeit des Dampfes weniger gut abgekühlt werden, wodurch sich eine deutlich höhere Temperaturdifferenz zwischen beiden Messfühlern einstellt. Die sich dann außerhalb des Temperaturdifferenz-Sollwertbereiches liegende Temperaturdifferenz kann dann in der Auswerteinrichtung ein optisches und/oder akustisches Signal zur Anzeige einer Fehlfunktion auslösen.

Es wird somit eine sichere und zuverlässige, lediglich von den thermischen Eigenschaften des Kondensates einerseits sowie des Dampfes andererseits abhängige Kontrolle des Kondensatableiters gewährleistet.

Sollte ein Kondensatableiter beispielsweise aufgrund eines mechanischen Defektes trotz des Vorhandenseins einer bestimmten Kondensatmenge in Kondensatsammelraum nicht selbstätig öffnen, um das Kondensat zu entleeren, so wird sich bei längerer Verweildauer das Kondensat im Kondensatsammelraum abkühlen.

Auch eine derartige Fehlfunktion kann problemlos erfasst werden, wenn nämlich das Messergebnis des ersten Messfühlers ―unabhängig von der Differenz-Messung im Vergleich zum zweiten Messfühler- unmittelbar mit einem vorgegebenen Sollwertbereich für das Kondensat verglichen wird. Im hier anstehenden Falle liegt die ermittelte Ist-Temperatur des Kondensates unterhalb des vorgegebenen Sollwertbereiches und diese Abweichung kann nun wieder in optischer und/oder akustischer Weise zur Anzeige gebracht werden.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: eine schematische Darstellung eines erfindungsgemäßen Kondensatableiters
- Figur 2: ein Blockschaltbild einer Kontroll- und Auswerteinrichtung zur Funktionskontrolle des Kondensatableiters gemäß Figur 1
- Figur 3: eine schematische Darstellung einer Prüfkammer eines Kondensatableiters nach einem weiteren Ausführungsbeispiel der Erfindung

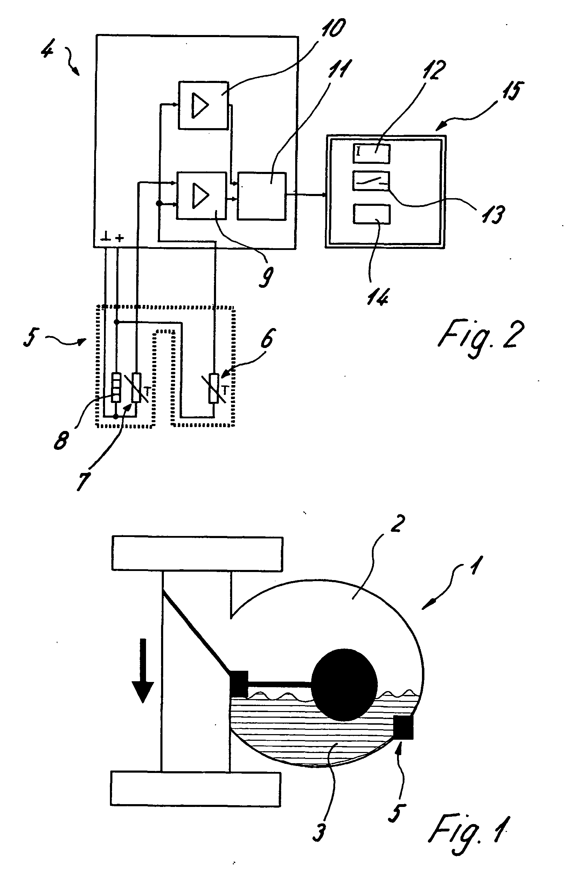

In Figur 1 ist mit dem Bezugszeichen 1 insgesamt ein Kondensatableiter bezeichnet, der hier stark vereinfacht abgebildet ist. Aufbau und Funktion eines Kondensatableiters sind an sich bekannt, so dass aus Gründen der Übersichtlichkeit auf detailliertere Darstellungen und Beschreibungen verzichtet werden kann.

Der Kondensatableiter 1 ist mit einem Kondensatsammelraum 2 ausgestattet, in dem sich bei normalem und störungsfreiem Betrieb periodisch eine bestimmte Menge an Kondensat 3 sammelt. Nach erreichen einer bestimmten Volumenmenge an Kondensat 3 wird der Kondensatsammelraum 2 automatisch geöffnet und das Kondensat 3 nach außen abgeführt.

Auch die hierfür notwendigen Funktionsprinzipien sind allgemein bekannt und bedürfen deshalb an dieser Stelle keiner besonderen Erläuterung.

Der Kondensatableiter 1 ist mit einer in Figur 2 in Art eines Blockschaltbildes dargestellten Kontroll- und Auswerteinrichtung 4 zur Funktionskontrolle ausgestattet.

Ein wesentlicher Bestandteil dieser Kontroll- und Auswerteinrichtung 4 ist ein mit dem Bezugszeichen 5 versehener Sensor, dessen Einbaulage sich aus Figur 1 ergibt. Es ist deutlich, dass dieser Sensor 5 in den Kondensatsammelraum 2 hineinragt, und zwar in den Bereich, in dem sich üblicherweise Kondensat 3 ansammelt.

Figur 2 macht deutlich, dass dieser Sensor 5 aus einem ersten Temperaturfühler 6 und aus einem zweiten Temperaturfühler 7 besteht.

Diese Temperaturfühler können elektrische Thermometer sein, z. B. Widerstandsthermometer.

Dem zweiten Temperaturfühler 7 ist ein Heizaggregat 8 zugeordnet, dessen Funktion weiter unten noch näher erläutert wird. Die Messergebnisse sowohl des ersten Temperaturfühlers 6 wie auch des zweiten Temperaturfühlers 7, die, wie schon erläutert, innerhalb des Kondensatsammelraumes 2 liegen, werden einem Differenzverstärker 9 der Kontroll- und Auswerteinrichtung 4 zugeführt.

Unabhängig davon wird das Messergebnis des ersten Temperaturfühlers 6 einem Verstärker 10 der Kontroll- und Auswerteinrichtung 4 zugeführt. Der erste Temperaturfühler 6 dient zur Ermittlung der Ist-Temperatur innerhalb des Kondensatsammelraumes 2, und zwar in dem Bereich, in dem sich normalerweise Kondensat 3 beim störungsfreien Betrieb sammeln sollte.

Der Umgebungsbereich des zweiten Temperaturfühlers 7 wird durch das Heizaggregat 8 auf ein Temperaturniveau aufgeheizt, welches höher ist als das durchschnittliche Temperaturniveau des im Kondensatsammelraumes 2 gesammelten Kondensates 3.

Die beiden Temperaturfühler 6 und 7 liefern somit in jedem Falle unterschiedliche Messergebnisse, aus denen sich eine Differenz ergibt.

Die beiden Messergebnisse werden dem Differenzverstärker 9 zugeführt und das sich ergebende Differenzsignal wird verstärkt und einem Koppelbaustein 11 zugeführt.
Das Messergebnis des Temperaturfühlers 6, welches unabhängig hiervon dem schon erwähnten Verstärker 10 zugeführt wird, wird in diesem Verstärker 10 ebenfalls verstärkt und dem Koppelbaustein 11 zugeführt.

Im Koppelbaustein 11 wird nun ständig die Differenzmessung zwischen den beiden Temperaturfühlern 6 und 7 mit einem Temperaturdifferenz-Sollwertbereich verglichen, ebenso wird das Messergebnis des Messfühlers 6 im Koppelbaustein 11 mit einem vorgegebenen Sollwert verglichen.

Dabei ist der Temperaturdifferenz-Sollwertbereich ebenso wie der Sollwertbereich für das Messergebnis des ersten Temperaturfühlers 6 ausgelegt auf einen störungsfreien Betrieb des Kondensatableiters 1, das heißt, die vorgegebenen Sollwertbereiche gehen davon aus, dass im Kondensatsammelraum 2 ständig Kondensat 3 gesammelt und dieses nach erreichen einer bestimmten Menge ordnungsgemäß abgelassen wird.

### Daraus ergibt sich nun folgende Funktionsweise:

Befindet sich bei störungsfreiem Betrieb innerhalb des Kondensatsammelraumes 2 eine bestimmte Menge an Kondensat 3, wird sich zwischen den beiden Temperaturfühlern 6 und 7 trotz der Auflieizung des Umgebungsbereiches des zweiten Temperaturfühlers 7 durch das Heizaggregat 8 eine relativ kleine Temperaturdifferenz ergeben, da das Kondensat 3 den Umgebungsbereich des zweiten Temperaturfühlers 7 relativ gut abkühlen und die angesprochene Temperaturdifferenz zum ersten Temperaturfühler relativ klein halten kann. Solange diese Vorrausetzungen gegeben sind, entspricht die Temperaturdifferenz, die tatsächlich ermittelt wurde, in etwa dem Temperaturdifferenz-Sollwertbereich, der im Koppelbaustein 11 als Vergleichwert vorgegeben ist. Es kann somit ein störungsfreier Betrieb festgestellt werden.

Eine deutliche Erhöhung der Temperaturdifferenz zwischen den beiden Temperaturfühlern 6 und 7 ergibt sich dann, wenn bei fehlerhaftem Betrieb kein Kondensat 3 im Kondensatsammelraum 2 gesammelt wird. Es befindet sich dann in diesem Kondensatsammelraum 2 ausschließlich oder überwiegend Dampf, der den Umgebungsbereich des zweiten Temperaturfühlers 7, welcher bekanntlich durch das Heizaggregat 8 zusätzlich aufgeheizt wird, weniger gut abkühlen kann.

Das dem Koppelbaustein 11 zugeleitete Temperatur-Differenz-Signal ist nun deutlich höher als der vorgegebene Temperaturdifferenz-Sollwertbereich, so dass nun eine Störung registriert werden kann.

Überlagert ist die Temperaturdifferenzmessung ständig durch die Messung der Ist-Temperatur im Kondensatsammelraum 2 über den ersten Temperaturfühler 6. Hier ist bei störungsfreiem Betrieb davon auszugehen, dass sich ein Messergebnis einstellt, welches über 100° Celsius liegt.

Wird nun im Falle einer Störung über längere Zeit im Kondensatsammelraum 2 befindliches Kondensat 3 nicht abgeführt, so kühlt dieses Kondensat 3 relativ schnell ab, so dass der Temperaturfühler 6 eine Temperatur ermittelt, die unter 100° Celsius liegt. Durch den Vergleich mit dem angestrebten Sollwertbereich für die Temperatur des Kondensates 3 im Koppelbaustein 11 wird nun in dem letztgenannten Fall ebenfalls die entsprechende Störung erkannt.

Die Störmeldungen des Koppelbausteines 11 können nun auf verschiedene Weise weitergeleitet und ausgewertet werden.

So kann z. B. eine Störungsmeldung über eine Anzeigeneinrichtung 12 optisch und/oder akustisch angezeigt werden. Eine Störungsmeldung kann aber auch über einen Schaltausgang 13 oder einen BUS-Anschluss 14 weitergegeben werden. Die letztgenannten Elemente befinden sich bautechnisch in einem insgesamt mit dem Bezugszeichen 15 versehenen Auswertegerät.

Es ist denkbar, die Messsignale mehrerer, innerhalb eines Heißdampf-Rohrsystems vorgesehener Kondensatableiter 1 in einem derartigen Auswertegeräte 15 zusammenzufassen. Damit wird die Möglichkeit eröffnet, beispielsweise an einer zentralen Kontrollstelle den jeweiligen Betriebszustand der im Einsatz befindlichen Kondensatableiter 1 anzuzeigen.

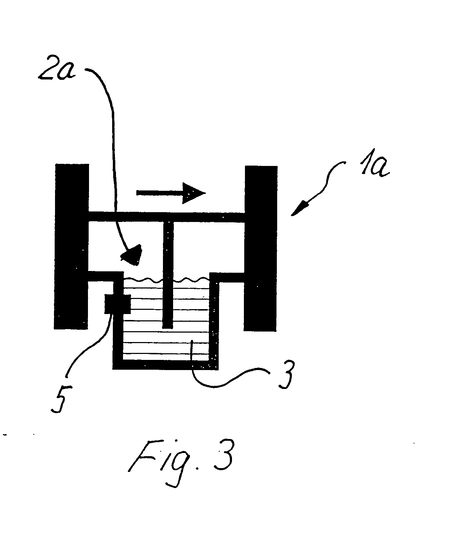

Bei Kondensatsammelbehältern 1 mit relativ kleinen Abmessungen ist unter Umständen die Anbringung eines Sensors 5 nicht oder nicht ohne weiteres möglich. In einem solchen Falle empfiehlt es sich, einen entsprechenden Kondensatableiter 1 mit einer vorgeschalteten Prüfkammer 1a auszustatten, wie sie in Figur 3 beispielhaft dargestellt ist. Eine derartige vorgeschaltete Prüfkammer 1a kann, wie im dargestellten Ausführungsbeispiel gezeigt, syphonartig ausgebildet sein und bildet eine Vergrößerung des Kondensatsammelraumes 2 des Kondensatsammelbehälters1. Der entsprechende Raum ist hier mit dem Bezugszeichen 2a versehen und nimmt Kondensat 3 auf. In diesen Raum 2a ragt dann ein Sensor 5, dessen Aufbau und Wirkungsweise der oben beschriebenen Konstruktion voll inhaltlich entspricht.

Eine derartige Lösung wird also immer dann sinnvoll sein, wenn die unmittelbare Anbringung des Sensors 5 im Kondensatsammelraum 2 des Kondensatableiters 1 nicht möglich ist und insoweit eine vorgeschaltete Prüfkammer 1a benötigt wird.

## Patentansprüche

1. Kondensatableiter (1) mit einem Kondensatsammelraum (2) und mit einer Kontroll-Auswerteinrichtung (4) zur Funktionskontrolle, **dadurch gekennzeichnet, dass** die Kontroll- und Auswerteinrichtung (4) mit einem in den Kondensatsammelraum (2) hineinragenden Sensor (5) mit einem ersten und einem zweiten Temperaturfühler (6, 7) ausgestattet ist, wobei der erste Temperaturfühler (6) zur Erfassung der Ist-Temperatur im Kondensatsammelraum (2) vorgesehen und dem zweiten Temperaturfühler (7) ein Hcizaggrcgat (8) zugeordnet ist, mittels dessen im Messbereich des zweiten Temperaturfühlers (7) eine Temperatur einstellbar ist, welche um einen vorbestimmten Betrag höher ist als die Temperatur des gesammelten Kondensates (3), wobei die ermittelte Temperaturdifferenz in der Auswerteinrichtung (4) als Differenzsignal crfasst und mit einem Temperaturdifferenz-Sollwertbereich verglichen und ausgewertet wird.

2. Kondensatableiter nach Anspruch 1, **dadurch gekennzeichnet, dass** das Messergebnis des ersten Temperaturfühlers (6) zur Erfassung der Ist-Temperatur im Kondensatsammelraum (2) mit einem Sollwertbereich für gesammeltes Kondensat (3) bei störungsfreiem Betrieb verglichen und ausgewertet wird.

3. Kondensatableiter nach Anspruch 1 oder 2, **dadurch gekennzeichnet, dass** die Messergebnisse der beiden Temperaturfühler (6, 7) einem Differenzverstärkcr (9) zugeführt, in diesem verstärkt und an einen Koppelbaustein (11) weitergeleitet werden, in dem der Vergleich des Differenzsignals mit einem vorgegebenen Temperaturdifferenz-Sollwertbereich erfolgt.

4. Kondensatableiter nach einem der vorhergehenden Ansprüche, **dadurch gekennzeichnet, dass** das Messergebnis des ersten Messfühlers (6) einem Verstärker (10) zugeführt, darin verstärkt und einem Koppelbaustein (11) zugeführt wird, in dem das verstärkte Signal mit einem vorgegebenen Sollwcrtbcrcich verglichen und ausgewertet wird.

5. Kondensatableiter nach einem oder mehreren der vorhergehenden Ansprüche, **dadurch gekennzeichnet, dass** die Messsignale vom Koppelbaustein (11) einem Auswertegerät (15) zugeleitet werden, welches mit einer optischen und/oder akustischen Anzeigeeinrichtung (12) und/oder einem Schaltausgang (13) und/oder einem BUS-Anschluss (14) versehen ist.

6. Kondensatableiter nach einem oder mehreren der vorhergehenden Ansprüche, **dadurch gekennzeichnet, dass** die Temperaturfühler (6, 7) elektrische Thermomctcr sind.

7. Kondensatableiter nach Anspruch 6, **dadurch gekennzeichnet, dass** die Thermomctcr Widerstandsthermometer sind.

8. Kondensatableiter nach einem der vorhergehenden Ansprüche, **dadurch gekennzeichnet, dass** dem Kondensatableiter (1) eine Kondensat (3) aufnehmende Prüfkammer (1a) vorgeschaltet ist und dass der Sensor (5) in den Sammelraum (2a) der Prüfkammer (1a) hineinragt.

9. Kondensatableiter nach Anspruch 8, **dadurch gekennzeichnet, dass** die vorgeschaltete Prüfkammer (1a) syphonartig ausgebildet ist.

## Claims

1. Steam trap (1) having a condensate collecting chamber (2) and having a control/evaluation device (4) for function control, **characterized in that** the control and evaluation device (4) is provided with a sensor (5) which projects into the condensate collecting chamber (2) and has a first temperature probe (6) and a second temperature probe (7), the first temperature probe (6) being intended to record the actual temperature in the condensate collecting chamber (2), and the second temperature probe (7) being assigned a heating unit (8) which can be used to set a temperature in the measurement range of the second temperature probe (7), which temperature is higher than the temperature of the collected condensate (3) by a predetermined magnitude, the temperature difference determined being recorded in the evaluation device (4) as a difference signal, compared with a temperature difference desired value range and evaluated.

2. Steam trap according to Claim 1, **characterized in that** the measurement result from the first temperature probe (6) for recording the actual temperature in the condensate collecting chamber (2) is compared with a desired value range for collected condensate (3) during fault-free operation and evaluated.

3. Steam trap according to Claim 1 or 2, **characterized in that** the measurement results from the two temperature probes (6, 7) are supplied to a differential amplifier (9), are amplified in the latter, and are forwarded to a coupling module (11) in which the differential signal is compared with a predefined temperature difference desired value range.

4. Steam trap according to one of the preceding claims, **characterized in that** the measurement result from the first measurement probe (6) is supplied to an amplifier (10), is amplified in the latter, and is supplied to a coupling module (11) in which the amplified signal is compared with a predefined desired value range and evaluated.

5. Steam trap according to one or more of the preceding claims, **characterized in that** the measurement signals are supplied from the coupling module (11) to an evaluation unit (15) which is provided with an optical and/or acoustic indicating device (12) and/or a switching output (13) and/or a bus connection (14).

6. Steam trap according to one or more of the preceding claims, **characterized in that** the temperature probes (6, 7) are electrical thermometers.

7. Steam trap according to Claim 6, **characterized in that** the thermometers are resistance thermometers.

8. Steam trap according to one of the preceding claims, **characterized in that** a test chamber (1a) which receives condensate (3) is connected upstream of the steam trap (1), and **in that** the sensor (5) projects into the collecting chamber (2a) of the test chamber (1a).

9. Steam trap according to Claim 8, **characterized in that** the upstream test chamber (1a) is in the form of a siphon.

## Revendications

1. Purgeur de condensat (1) comportant un espace collecteur de condensat (2) et un dispositif d'évaluation et de contrôle (4) aux fins du contrôle fonctionnel, **caractérisé en ce que** le dispositif d'évaluation et de contrôle (4) est équipé d'un capteur (5) faisant saillie dans l'espace collecteur de condensat (2), doté d'une première sonde de température et d'une deuxième sonde de température (6, 7), sachant que la première sonde de température (6) est prévue pour détecter la température réelle dans l'espace collecteur de condensat (2) et qu'un groupe de chauffage (8) est associé à la deuxième sonde de température (7), au moyen duquel une température peut être réglée dans la zone de mesure de la deuxième sonde de température (7), laquelle température est plus élevée d'une valeur prédéterminée que la température du condensat collecté (3), sachant que la différence de température déterminée dans le dispositif d'évaluation (4) est détectée comme signal différentiel, est comparée à une plage de valeurs de consigne de différence de température et est évaluée.

2. Purgeur de condensat selon la revendication 1, **caractérisé en ce que** le résultat de mesure de la première sonde de température (6) servant à détecter la température réelle dans l'espace collecteur de condensat (2) est comparé à une plage de valeurs de consigne pour le condensat collecté (3) en cas de fonctionnement sans perturbation et est évalué.

3. Purgeur de condensat selon la revendication 1 ou 2, **caractérisé en ce que** les résultats de mesure des deux sondes de température (6, 7) sont amenés à un amplificateur différentiel (9), sont amplifiés dans ce dernier et sont transférés à un bloc fonctionnel de couplage (11), dans lequel est effectuée la comparaison du signal différentiel avec une plage de valeurs de consigne de différence de température prédéfinie.

4. Purgeur de condensat selon l'une quelconque des revendications précédentes, **caractérisé en ce que** le résultat de mesure de la première sonde de mesure (6) est amené à un amplificateur (10), y est amplifié et est amené à un bloc fonctionnel de couplage (11), dans lequel le signal amplifié est comparé à une plage de valeurs de consigne prédéfinie et est évalué.

5. Purgeur de condensat selon l'une quelconque ou plusieurs des revendications précédentes, **caractérisé en ce que** les signaux de mesure sont conduits par le bloc fonctionnel de couplage (11) à un appareil d'évaluation (15), qui est pourvu d'un dispositif d'affichage (12) optique et/ou acoustique et/ou d'une sortie de commutation (13) et/ou d'un raccordement de bus (14).

6. Purgeur de condensat selon l'une quelconque ou plusieurs des revendications précédentes, **caractérisé en ce que** les sondes de température (6, 7) sont des thermomètres électriques.

7. Purgeur de condensat selon la revendication 6, **caractérisé en ce que** les thermomètres sont des thermomètres à résistance.

8. Purgeur de condensat selon l'une quelconque des revendications précédentes, **caractérisé en ce qu'**une chambre de contrôle (1a) recevant du condensat (3) est montée en amont du purgeur de condensat (1), et **en ce que** le capteur (5) fait saillie dans l'espace collecteur (2a) de la chambre de contrôle (1a).

9. Purgeur de condensat selon la revendication 8, **caractérisé en ce que** la chambre de contrôle (1a) montée en amont est réalisée à la manière d'un siphon.
